# EUROPEAN PATENT SPECIFICATION

(11) **EP 1 192 109 B1**
(45) Date of publication and mention of the grant of the patent: **02.09.2009**
(21) Application number: 00914230.8
(22) Date of filing: 29.03.2000
(51) Int. Cl.: C02F 11/12

(54) **METHOD OF TREATING AND UTILIZING SLUDGE**
VERFAHREN ZUR BEHANDLUNG UND VERWENDUNG VON SCHLAMM
TECHNIQUE DE TRAITEMENT ET D'UTILISATION DE BOUES

(30) Priority: 29.03.1999 FI 990696; 11.10.1999 FI 992178; 31.12.1999 FI 992853
(43) Date of publication of application: 03.04.2002
(73) Proprietor: Etor Oy, 90250 Oulu (FI)
(72) Inventor: TORKKELI, Esko, FIN-90650 Oulu (FI)
(74) Representative: Laurinolli, Tapio Kullervo
(86) International application number: PCT/FI2000/000262
(87) International publication number: WO 2000/058229

(56) References cited:
- WO-A1-94/01369
- WO-A1-97/01513
- US-A- 5 611 935
- US-A- 5 614 458

## Description

The invention is related to a method of treating and utilizing sludge.

A sludge may be e.g. municipal sewage sludge a remarkable portion of dry matter of which today is cellulose, hemicellulose and lignin coming from soft tissue. The method may be used also for treating and utilizing industrial sludges, like sludges of wood processing industry or food industry, and sludges produced by agriculture or animal husbandry, or animal manure sludges, in general. For economy of the method it is recommendable that the dry matter content of a sludge is at least 15 %.

It is well-known that treatment of sludges is problematic and expensive and that significant environmental hazards, e.g. odor inconveniences, are caused therefore.

In the prior International Publication No. WO97/01513 the inventor presents a method of treating sludge in which, for producing solid products of sludge and for hygienizing these products, hydrophobic grains of peat are mixed with sludge, and the mixture is extruded to form pieces which are dried and possibly coated for stabilizing and hygienizing them. An object of the solution is to get a sludge as directly and rapidly as possible to a form of solid and environmentally non-hazardous products.

US-A-5 611 935 discloses a method of treating and utilizing sludge whereby sludge is mixed with dust and then dried.

In the drying process of US-A-5 611 935 the dried sludge is recirculated back to be mixed with the predewatered sludge. The dry sludge is recirculated as hot having a temperature of about 120 °C and the supply of dry sludge is adjusted such that the dry substance content of the mixture is preferably 75 mass %.

An object of the present invention is to provide a method of treating and utilizing sludge which is better, more versatile to apply, and with better economy than the prior methods.

To reach this object, a method of treating and utilizing sludge of the invention is characterized in that which is defined in the appended claims.

Very remarkable savings of raw material costs in sludge treatment are obtained with the invention. A sludge is brought to a solid and advantageous form largely by means of the solid material and energy of the sludge itself.

The invention and some embodiments thereof are described in further detail in the following with reference to the accompanying drawings, wherein:
Fig. 1 is a flow chart which describes generally an embodiment of the method of the invention;
Fig. 2 is a flow chart which describes generally another embodiment of the method of the invention;
Fig. 3 is a flow chart which describes generally still another embodiment of the method of the invention;
Fig. 4 is a flow chart which describes generally still another embodiment of the method of the invention;
Fig. 5 is a diagram which presents the embodiments of Figs. 1 and 3 and in further detail a composting included in the embodiments;
Fig. 6 presents schematically a side view of a composter for carrying out the continuously operating composting of Fig. 5;
Fig. 7 presents a schematical plan view of an example of a sludge treatment plant based on the method of the invention;
Fig. 8 is a diagram which presents generally an application of the embodiments of the method of Figs. 1 and 3 to treatment of waste water;
Fig. 9 is a diagram which presents an example of applying the method of Fig. 3 to a waste water treatment process; and
Fig. 10 is a diagram which presents another example of applying the method of Fig. 3 to a waste water treatment process.

The initial material of hydrophobic organic grains,which are essential in the method of the invention, are preferably hydrophobic grains of peat. The term "hydrophobic organic grains" is used with good reason because the grains circulated several times in the method of the invention, the initial core of them being a hydrophobic grain of peat, may be split to smaller grains, and then a portion of the hydrophobic grains may consist totally or almost totally of sludge particles gathered by means of the grains.

An advantageous way of manufacturing this kind of grains is following. Well-decomposed sedge peat or similar kind of peat is pressed in a peat digging field in a usual way with intensive extrusion to pieces, either briquettes or so-called wavy sod peat. Peat briquettes or wavy pieces are dried on the peat digging field typically to a moisture content of 30 to 40 % by weight water. Dried pieces are crushed to grains the size of which is typically within a range of 2 to 20 millimeters. Grains may be dried further for improving the hydrophobicity thereof, for example to a moisture content of below 20 or even below 10 %. Hydrofobization begins at a moisture content of about 35 %, and the permanent, long-term hydrofobicity is achieved at a moisture content of about 10 % by weight water. In many cases a suitable moisture content is about 15 to 20 % by weight water. The grains manufactured in this way are compact and hard and withstand well both mechanical handling and handling in a wet process without absorbing water or breaking down.

Hydrophobic grains of peat include carbon usually about 70 to 80 % of solids. Most of it is bound to compounds which are difficult to degrade: cellulose, hemicellulose and lignin, and only about 15 to 20 % of the carbon is soluble or in short-chained compounds. In addition to fibrous matter, this kind of peat includes also enough material decomposed to colloidal particles, which contributes to provide compact, hard and strongly hydrophobic grains. The nitrogen content is typically 2 to 3 % and phosphor content 0.2 to 0.4 % of solids. The fuel value of hydrophobic peat grains is good, about 10 to 20 MJ/kg, depending on the degree of dryness. In view of the operation of the method and utilization of the grains produced with the method, this kind of peat grains have excellent properties. Also manufacturing costs are reasonable.

Peat grains are manufactured in peat digging fields also by directly cutting or milling which is economically even more advantageous method. The grains obtained may be hydrofobized, but there are problems in making them compact and durable enough. With suitable treatment methods these properties probably may be improved, and then also this kind of peat grains possibly may be used in the method of the invention.

Technically, it is also possible to use hydrophobized peat pellets. At least presently, high manufacturing costs of this kind of pellets exclude the use thereof, as an object of the method of the invention is definitely to reduce raw material costs of sludge treatment. Moreover, additional binding agents are often used in pellets, which raises further on the manufacturing costs and which may cause hazardous effects in processes to which the method of the invention is applied.

The ability of the hydrophobic grains to bind hydrophilic sludge particles is based on the known phenomenon that hydrophilic sludge particles in water are attached to hydrophobic particles for the incluence of so called zeta-potential thereof. This happens when hydrophobic grains are mixed with sludges including typically 70 to 80 % water. This happens also as waste water is introduced to a filter layer consisting of hydrophobic grains. Water goes through the filter because hydrophobic grains do not absorb water. This kind of hydrophobic filter works for removing both coarse and fine sludge particles from waste water.

It is typical for biomasses that they are hydrophobized when they are dried dry enough. It depends on the quality of the sludge particles attached to the surface of a hydrophobic grain how successfully it is hydrophobized and compacted when dried. For example particles consisting of cellulose, hemicellulose and lignin, high contents of which are icluded in municipal waste water, are hydrophobized and compacted on the surface of grains very well.

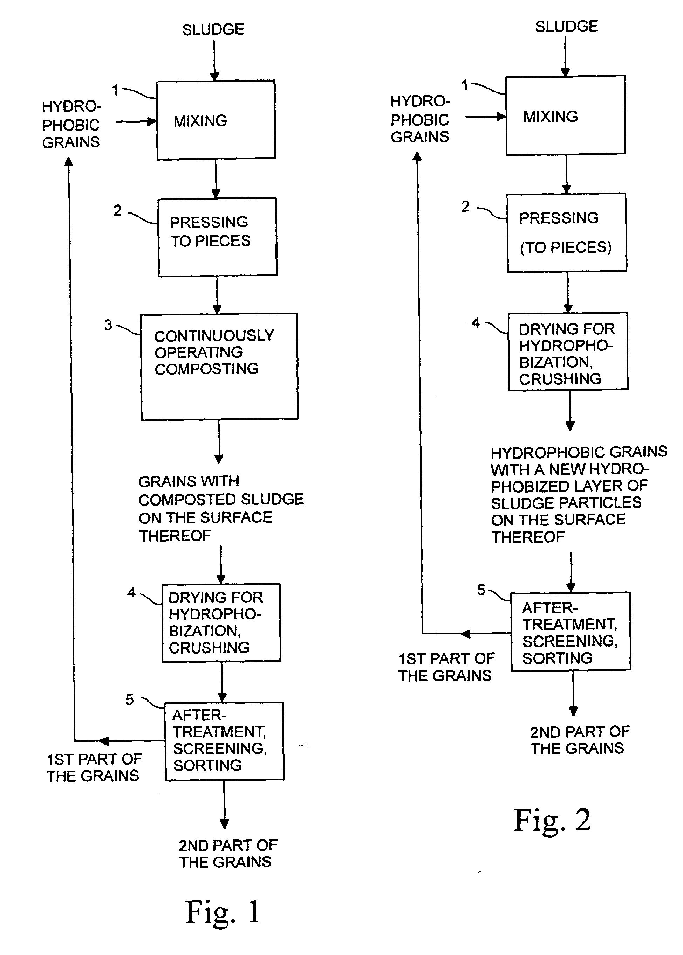

Figs. 1 to 4 present generally some embodiments of the method of the invention.

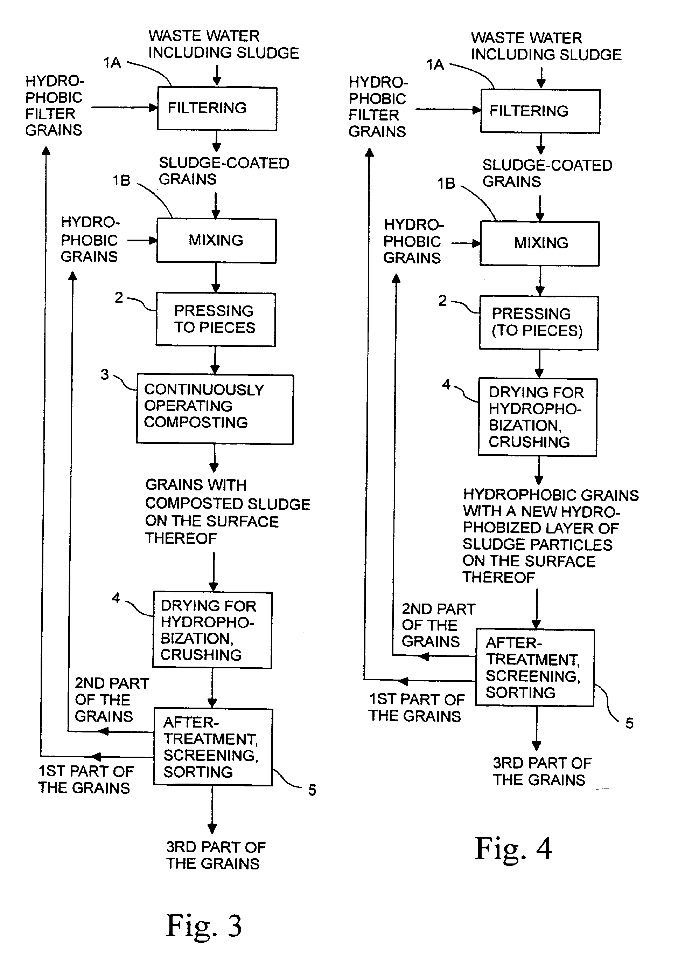

In the embodiments of Figs. 1 and 2, sludge is brought to the process and bound to the surface of organic grains by mixing in phase 1. In the embodiments of Figs. 3 and 4, waste water is brought to the process, the waste water being filtered with hydrophobic grains in phase 1A, whereby the hydrophilic sludge particles in the waste water are attached to the surface of the grains. A necessary amount of hydrophobic grains are mixed with grains coated with sludge in phase 1B. In all the embodiments, the next phase 2 is pressing, advantageously extrusion, which helps the sludge particles to attach to the surface of the grains and extracts water bound to sludge particles from the mixture.

Such an amount of hydrophobic grains are mixed with the sludge that the water content of the mixture is less than 60 %. A suitable moisture content for composting, for example, is about 50 %. The pieces extruded may be cylindrical pieces, for example, the diameter of which is of the order of 5 centimeters and the length 15 to 20 centimeters.

In the embodiments of Figs. 1 and 3, the next phase 5 is composting, preferably rapid continuously operating composting for which it is advantageous to press coherent pieces of the mixture in phase 2. During the composting, the pieces are mostly broken back to grains on the surface of which there is a composted, still wet, layer of sludge. A core, a hydrophobic grain, is not waterlogged. In phase 4, the grains attached to each other or the grains grown up too big are crushed smaller, and also the surface layer is hydrophobized by drying it dry enough. In the embodiments of Figs. 2 and 4, the mixture is not composted but the process proceeds directly to phase 4. Therefore, it is not necessary that coherent pieces are obtained in the pressing phase 2. In phase 5, the grains are screened, and a great part thereof is circulated back to the process, either to phase 1 for being mixed with sludge (Figs. 1 and 3) or to work as filter grains in phase I A and for being mixed with sludge-coated grains in phase 1B (Figs. 2 and 4). The grains may be circulated 5 to 10 times, for example.

Only a small amount of new grains are needed in the process. In other words, sludge is solidified essentially by gathering it with the sludge itself. Drying is made very advantageously because the moisture is in the surface layer of the grains from which the distance for evaporation is short. The method is very cost effective. The circulation which always include drying at an elevated temperature (preferably at 60 to 80 °C) is hygienizing the grains, and the composting increases amount of carbon in grains which is soluble or bound to short-chained compounds, which is advantageous in many applications. Forming a layer of sludge on the surface of the grains and drying in a drum dryer causes rounding of the grains, which is often advantageous in the utilization of the grains.

The methods not including composting (Figs. 2 and 4) are thought to be applied in such a way, for example, that the excess grains from phase 5 are burned and the energy obtained is utilized. In the direct drying nothing of the fuel value of the grains is lost, which happens to some extent with composting. An advantageous and very suitable drying method for grains is pulse drying in which hot air, e.g. 60 to 80 °C, is first blown through the grains long enough so that the grains are warmed up. Thereafter, air with a temperature somewhat lower than the temperature of the grains is blown through the grains, whereby the moisture is removed efficiently from the surface layer for the influence of a difference in vapour pressure. This is repeated as many times as necessary.

To prevent the amount of grains from increasing with circulation, a portion of grains corresponding to the dry matter gathered by the grains must be removed from the process. The circulation may be arranged in such a way, for example, that 10 to 20 % new hydrophobic grains are always added to the circulating grains, and the excess grains are taken away. According to need, the grains may be screened away to fractions for different uses. Grains may be also taken away without screening, or a portion of them may be circulated without screening. If only the amount of grains corresponding to the dry mater gathered to the grains is removed from the process, normally a certain fraction is taken away by screening according to the use of the grains.

In screening, a fraction of 0 to 2 millimeters, 0 to 4 millimeters, or 2 to 4 millimeters may be taken away. Such grain sizes are suitable for burning or to be used for fertilizers, for example. The finest dusty matter, although it increases dry matter content in the mixture, is preferably taken away from circulation from time to time because very small particles are not able to gather matter to be composted on the surface thereof. The screening may be made with a seave, disc screen, drum screen, or pneumatic screen.

In view of experiments, big grains seem to have better ability to grow than small ones, and big ones may be circulated longer than small ones. A typical thickness of the surface layer formed on small grains during one cycle is of the order of 1 millimeter. For big grains a typical thickness is 1 to 3 millimeters. Also bigger dry matter particles seem to attach to big grains than to small grains.

The quality of a sludge affects how many times grains may be circulated in a process. In municipal waste water, for example, there are a lot of fibrous sludge particles which after hydrophobization are well-attached on the surface of grains. With treatment of this kind of sludge, grains may well be circulated 10 times on an average, for example. As big grains are crushed for further circulation, grains are obtained of which a portion is totally and a portion mostly consisting of sludge particles. When a circulation process is after initial phase properly in operation, there may be long periods during which new "initial grains" need not be added to the process at all. On the other hand, if a sludge is very fine-grained, like e.g. sludges of food industries often are, a surface layer formed on the initial grains begins easily to pulverize as a certain thickness is reached after several circulations. With treatment of this kind of sludges, a suitable amount of circulations on an average may be 5, for example.

The more times grains are circulated through composting, especially composting in thermophilic phase, the more the grains blacken, i.e. are carbonizing, also inside thereof. Also a matter difficult to degrade (cellulose, hemicellulose and lignin) in-hydrophobic grains seems to be composted and is gradually degraded to carbon which is biologically easily available. At the same time the properties of grains as a substrate for composting are improved as the amount of carbon biologically easily available in the surface layer is increasing. In view of experiments, the most of the carbon of the grains is soluble or in short-chained compounds after 5 composting cycles, for example.

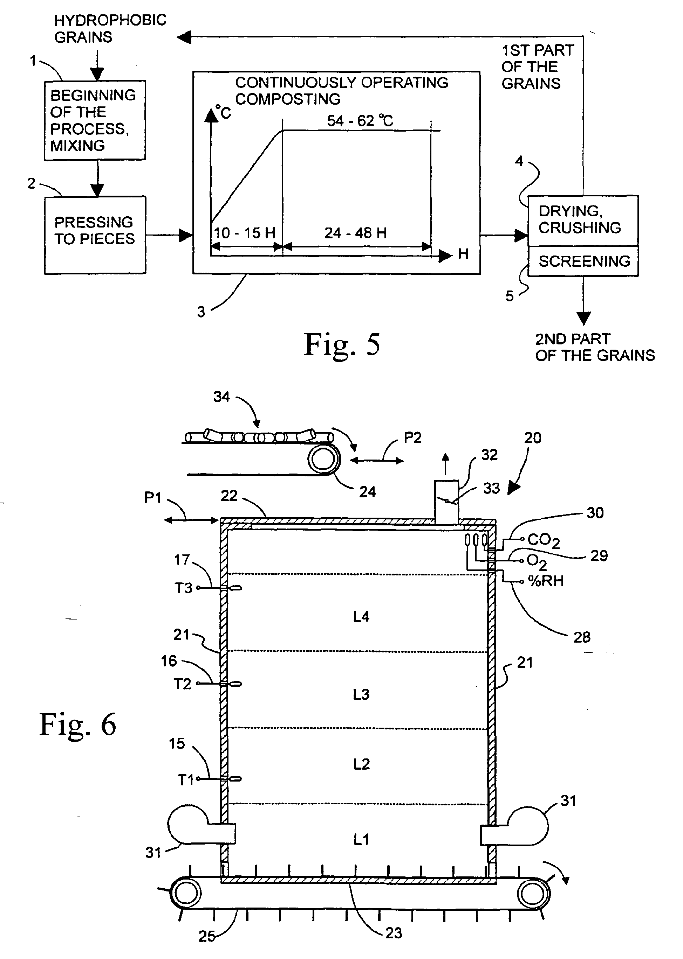

A continuously operating composting method suitable to be used with the method of the invention is described in the following with reference to Figs. 5 and 6. The moisture content of the pieces pressed in phase 2 from the mass formed of the mixture of sludge and grains or sludge-coated grains obtained from phase I must be 45 to 65 % by weight water, and the best moisture content for composting is, in view of experience, about 55 % by weight water. In circulated grains grown on hydrophobic peat grains there are normally enough nutrients for action of microorganisms needed for composting, and, as stated above, the circulation of grains in the process improves the properties thereof in view of successful composting.

The microorganisms of a compost act best in neutral or slightly acidous conditions within a pH range of 5.5 to 8. For fungi-like microorganisms decomposing cellulose and lignin, slightly acidous conditions are favourable, for example. A preferred pH range is 6 to 7. In the alternatives and applications considered here, pH is normally within the proper range, and no adjustments are needed.

Composting phase 3 is continuously operating. It is aimed at as efficient as possible thermophilic microbial action the most advantageous temperature range for which is 54 to 62 °C, and the process is controlled to keep the temperature within that range. After initializing phase, as the process is in full operation in a suitable composting reactor, it produces more heat than what is needed for maintaining the reaction. Pieces are loaded into a reactor, and composted material is removed therefrom in such a way, for example, that there are several layers loaded at different times. In view of experience obtained with an experimental reactor, as a new layer of pieces to be composted is loaded to the reactor, the rise of temperature to the desired level takes typically 10 to 15 hours. The pieces are then kept within the desired temperature range of 54 to 62 °C typically 24 to 48 hours, during which time they become composted and largely break down.

An aim in the composting process is to reach rapidly the desired state of thermophilic microbial action therefore that specifically in this state the microorganismis like actinomycetes and fungi-like microbes act, which decompose efficiently cellulose, hemicellulose and lignin. Composting of material as pieces is very advantageous, firstly because of a lot air remaining between the pieces. For satisfying the demand of oxygen of the microbes, there is normally no need to input air to a process. Another advantage relates to action of fungi-like thermophilic microorganisms. Many such microorganisms act efficiently in the outer layer of a compost at a high temperature. In the present method, each piece as such is like a compost, and there are a lot of outer layer in each piece in which these microorganisms are able to act.

In phases 4 and 5 the material removed from the compost is dried, crushed if necessary and screened in a way described here above. A portion of the dried grains, the surface of which is thereby hydrofobized again, is circulated back to the beginning of the process, and another portion is taken away from the process.

In Fig. 6, an exemplary suitable composting reactor is presented in schematical cross section. The reactor 20 which is described here schematically and as simpified, is a silo-like space with side walls 21, a bottom 23, and a cover 22 openable and closable in a way indicated by arrow P1. In the cover there is an exhaust connection 32 provided with an adjustable baffle 33. The exhaust connection is advantageously provided also with a fan (not shown) for making removal of gases and water vapour from the reactor more efficient, if necessary. Blowers 31 are placed close to the bottom. A conveyor belt 24 extends above the reactor for supplying biomass pieces to into the reactor. The belt may be moved in a way indicated by arrow P2 so that the pieces are easier to be loaded uniformly into the reactor. A new layer L4 is always loaded into the reactor on the earlier layers L3, L2, and L1. In connection with the bottom 23 there is a conveyor mat 25 provided with compartments for removing from time to time carbonized and decomposed material gathered on the bottom. The reactor includes several measurement and control devices for monitoring and controlling the conditions in the reactor. By an example, temperature meters 15, 16-and 17 are shown here for measurement of corresponding temperatures T1, T2 and T3 in different places of the reactor. Moisture is measured with a detector 28, oxygen with a detector 29 and carbon dioxide with a detector 30. By means of the blowers 31 and by increasing exhaust correspndingly, air circulation in the reactor may be increased, if necessary. By increasing the air circulation the reactor may be cooled, for example, if the temperature is rising too high, above 62 °C, or oxygen necessary for microbial action may be increased by taking in oxygen rich air and at the same time exhausting carbon dioxide from the reactor. From the exhaust gas also the heat may be recovered. Moreover, a mantel of the reactor may be provided with water cooling (not shown), whereby heat may be recovered from the cooling water to be used preferably for drying the carbonized material.

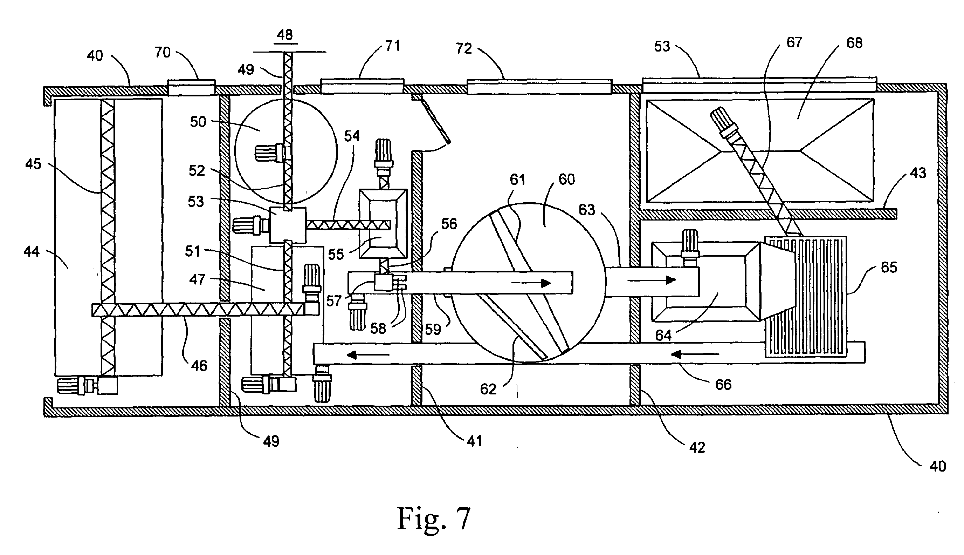

A sludge treatment plant of Fig. 7 is situated in a building which is confined by an outer wall 40. For receiving peat grains, there is an open container 44 in the left side end of the building to which the peat grains may be transferred directly from a truck. At the bottom of the container there is a first conveyor screw 45 by which the grains are transferred to a conveyer 46 which feeds grains to an intermediate storage 47 at need. The receiving space of peat grains is separated from other rooms by a wall 69. Sludge is brought from a sewage treatment plant 48, for example, wherefrom it is fed with a screw49 to an intermediate storage container 50. Also the possible additives are to the container 50. A screw 52 conveys sludge and a screw 51 hydrophobic grains to a mixing box 53, and these are conveyed further on by means of a mixing screw 54 to a mixing and pressing unit 55 in which the mixture is mixed furher for making it homogeneous. A screw 56 forces the mixture finally to an extrusion unit 57 in which an additional wing in the screw 56 forces the mixture to extrude through tubular mouthpieces 58. The mouthpieces extrude pieces with a thickness of about 5 centimeters and a length of about 20 centimeters (not shown) to a conveyer belt 59. The conveyer 59 is extended above the reactor 60, and the pieces drop from the end thereof down to the reactor. Below the conveyer there is an alternatingly moving sweeping wing 62 which levels the pieces in the reactor. At the bottom of the reactor there is a rotating drag scraper 61 which removes decomposed granular material from the bottom and drops it down to a conveyor belt 63 via openings (not shown) parallel with the conveyor belt. The reactor room is separated from other rooms by walls 41 and 42. The reactor must have an own well-confined room because a lot of moisture and also carbon dioxide and some amount of other gases are produced in the composting reaction. A belt 63 conveys the grains to a dryer 64 from which the grains are after drying moved to a screen 65. A fraction to be circulated is introduced from the screen 65 to a conveyor belt 66 which conveys the grains to the intermediate storage 47. A screw 67 conveys a fraction to be recovered from the screen 65 to an intermediate storage of excess grains which is separated from the drier room by a wall 43. Door systems 70, 71, 72 and 73 are arranged to lead out from the separate rooms, respectively.

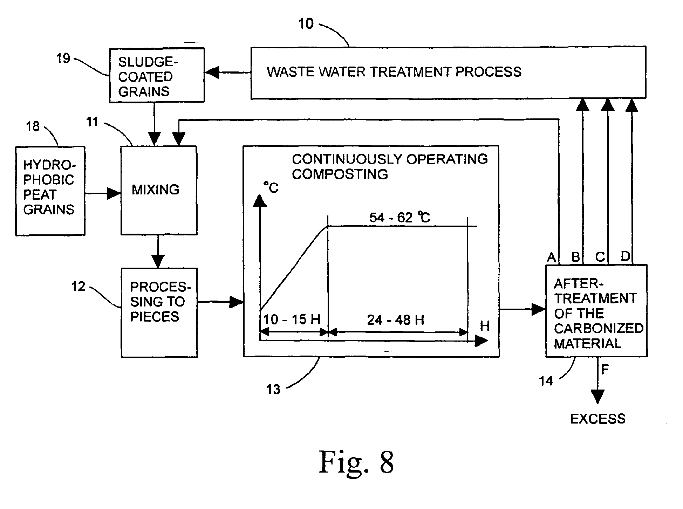

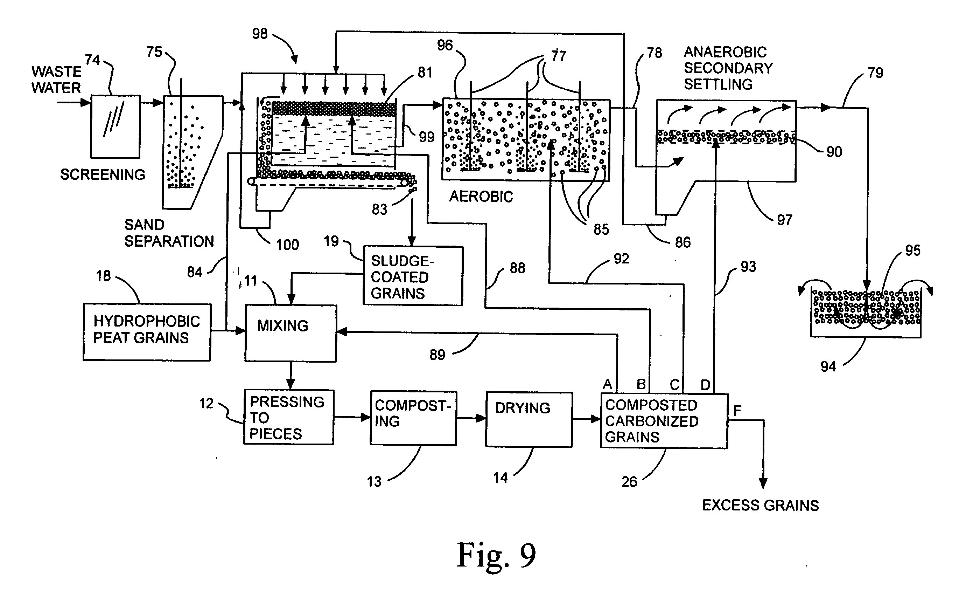

In the following, an application of the method of the invention to biological waste water purification is described with reference to Figs. 8 and 9. The waste water is conducted after screening 74 and sand separation 75 to a phase 98 in which the waste water is filtered through a filter layer 81. The filter layer consists of hydrophobic grains of peat and / or composted hydrophobic grains with a core of hydrophobic peat grain. Hydrophobic grains of peat are somewhat lighter than water, and so the filter is floating. Hydrophobic grains filter sludge particles from the waste water, and as the grains become sludge-coated, the surface layer of the filter begins to hold back water flow. The sludge-coated layer of grains is scraped with a scraper over the brim of the tank. A conveyor is there below which conveys the sludge-coated grains 83 towards further treating in a way described here below. New grains, either hydrophobic grains of peat (reference sign 84) or composted hydrophobic grains (reference sign 88), are brought correspondingly to the underside of the filter layer.

The water gone through the filter layer is introduced from below the filter into the next phase of the purification process, as is indicated by arrow 99.

In the following, treatment of sludge-coated filter grains is described with reference to Figs. 8 and 9. Sludge-coated grains 93 are mixed with hydrophobic grains of peat according to need in phase 11 for obtaining a mixed mass suitable to be extruded. A suitable content of the mass is 50 to 54 %. In phase 12, the mass is extruded to pieces which are composted in phase 13 in a process according to Fig. 8 which is similar to that one described with reference to Fig. 5. A layer of new pieces is added periodically, e.g. once a day. A time for composting is then, normally, 1.5 to 3 days. Grains circulated several times are carbonized, and the carbon therein is largely converted to soluble carbon and carbon bound to short-chained compounds. Hydrophobic grains obtained in this way may be used again in the filter, and as they include also a lot of organic carbon, they are very suitable for a carbon source and substrate for micoorganisms, i.e. a so-called film surface for microorganisms. It should be noted also that the energy needed for this conversion of hydrophobic grains and sludge of waste water to a more advantageous form may be taken almost totally from the treated material itself.

After-treatment 14, 26 (Fig. 9) or 14 (Fig. 9) of the composted material may include drying, screening and sorting in which the grains are guided according to the size thereof to different uses. As is indicated by arrow 88, a portion of grains (B) may be introduced back to the filter layer 81 to compensate sludge-coated grains removed from the filter. A suitable grain size for this may be 10 to 60 millimeters, for example. A portion of the grains (A), on the other hand, may be circulated back to the initial phase of the composting, as is indicated by arrow 89. For this, e.g. smaller grains with a size of 6 to 10 millimeters are suitable. A portion of grains (C and D) may be used in other phases of waste water purification as a substrate and carbon source for microbes, as is indicated by reference signs 92 and 93. The grains with a size of 6 to 10 millimeters are suitable for this use, also, as well as very small grains with a diameter of 1 to 3 millimeters. The excess grains (F) may be used for other suitable purposes, e.g. as raw material for fertilizers.

The waste water departing from the filtering phase 98 is next conducted to an aerobic phase 96, as is indicated by reference sign 99. Favourable conditions for nitrification phase of removal of nitrogen, among other things, are provided by adding composted carbonized grains 85 as a substrate for microbes to a tank provided with efficient aeration 77. A strong colony of microbes is maintained in the tank by adding grains according to need. By the amount of grains the process may also be adjusted to correspond to the amount waste water and the amount of nitrogen included in the waste water. The efficient aeration circulates grains 85 in the tank, and some amount of them is continuously removed from this phase with the outgoing waste water 78 to the next phase of purification. New grains are needed also for compensating the grains removed. Grains may be dried to a suitable degree of hydrophobicity, so that they begin gradually to absorb water and, for this and decomposing microbial action, to decompose. Duration of decomposing may vary within a range of 1 to 10 days, for example, depending on the need for adjustment and other affecting factors.

The next phase is an anaerobic secondary settling 97 in which a sunk filter layer 90 consisting of hydrophobic grains carbonized by composting is disposed in a tank. For arranging the filter in the tank, there are gratings or similar means between which additional carbonized hydrophobic grains are supplied at need, as is indicated schematically by arrow 93. The waste water departing from phase 96 is introduced underneath a filter layer 90, as is indicated by reference sign 78, the outlet 76, on the other hand, being above the filter layer so that the water must go through the filter. Some amount of decomposing and waterlogging grains come from the preceding phase to the tank, and also the grains of the filter 90 are gradually decomposing for the influence of anaerobic microbial action. The sludge produced in this way is settling on the bottom of the tank, and it is circulated from a bottom cavity back to the filtering phase 96, as is indicated by reference sign 86. Still another filter 95 consisting of hydrophobic grains is used in a tank 94 for filtering waste water (reference sign 79) going out of the purification process.

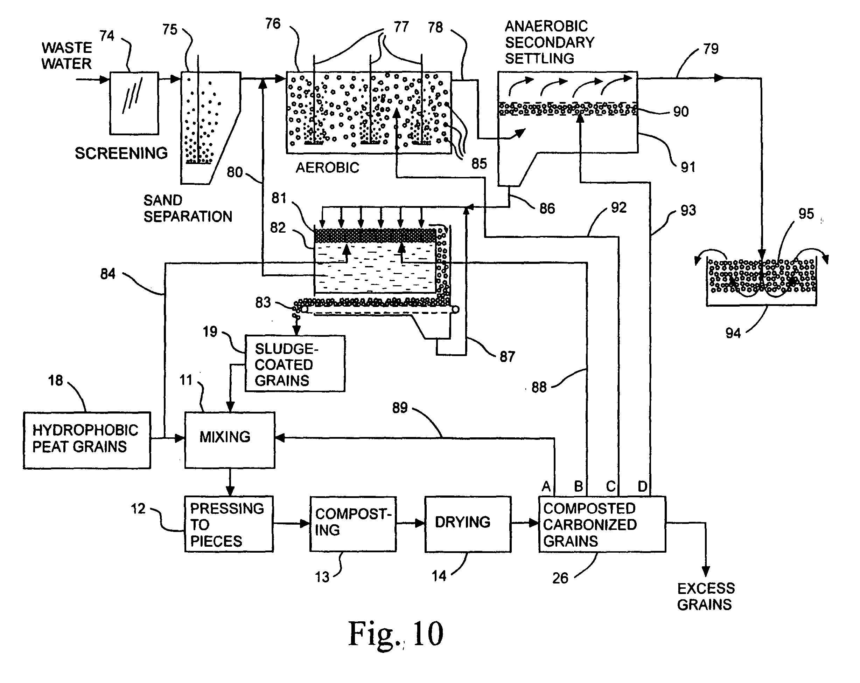

Another example of biological system for waste water purification to which the method of the invention is applied is described in the following with reference to Fig. 10. In this case, the waste water is conducted after screening 74 and sand separation 75 directly to an aerobic phase 76 the operation of which is essentially similar to and the purpose of which is essentially same as those of the corresponding phase 96 in the example of Fig. 9. Here, the own carbon source of the waste water is used, and composted grains 85 are used only as an additional carbon source and a substrate for microbes by means of input 92 according to need.

Next, the waste water is fed to an aerobic secondary settling 91 the operation of which is essentially similar to and the purpose of which is essentially same as those of the corresponding phase 97 in the example of Fig. 9. The sludge of the waste water and the grains coming from the preceding phase, which grains also gather sludge thereto, are settling in this phase, and they are conducted via the filtering phase 81 back to the beginning of the process. The sludge is settling down rapidly in the settling tank because an anaerobic phase is concerned. Probably, a part of the sludge is conveyed to an anaerobic filter 90 and is gradually settling down with the matter breaking down from the filter. The operation of this phase and the following filtering 94 of the outgoing water are similar to those of the corresponding phases described above in connection of the example of Fig. 9, and therefore they are not described here again.

Also the filtering phase 81 operates similarly to the phase 98 described above in connection with the example of Fig. 9. In this case, only, the water is conducted back to the aerobic phase 76, as is indicated by reference number 80. Also the filter 81 is used and it is replenished in quite a same way.

The grains produced with the method may be also after-treated further, e.g. by coating. The coating may be e.g. lime, ash, nutrient solution, clay, gypsum, silicon carbonate, and so on. Also more than one coating with different materials may be made.

The grains may be used for many purposes some of which are already mentioned above. The may be used as fuel, as environmental grains, as aerators in substrates for culture, in various fertilizers, as an additive in other sludges, e.g. for activating an anaerobic sludge, or in biofilters.

Especially well the method of the invention is suited for the utilization of hydrophobic organic grains, like hydrophobic grains of peat, in manufacture of biological fertilizers. Hydrophobic grains of peat are a very suitable basic material for this purpose, these peat grains as such including a lot of carbon, a part of it in an easily available mode, and enough nutrients for maintaining microbial activities important in the operation of a biological fertilizer. By using different sludges, like sewage sludges, agricultural sludges or suitable animal manure sludges, in general, or sludges of food industry, suitable nutrients or other affecting substances are obtained to a certain fertilizer.

Nutrients or other affecting substances may be added also as solutions to a sludge among which they are transferred to the grains. Grains may be also coated with nutrient mass between circulations and then continue circulations whereby the nutrient remains in the inside of the grains and the dissolution thereof is retarded. Other affecting substances may include e.g. acidity adjustment agents, like ash (which may include also useful nutrients and trace elements) or lime. In some cases it is advantageous to utilize sludge precipitated with ferrous flocculants, because the iron remaining in the sludge is in a proper form for fertilizing of acidous forest lands.

The solubility of fertilizers and the nutrients may be affected also by adjusting the hydrophobicity of grains by means of drying. On the other hand, by means of the amount of composting cycles, the amount of available carbon in the grains and so the operation therof as a substrate and carbon source for microbes may be affected.

Some embodiments of the invention are described above, the invention naturally not being restricted thereto. The applicant's opinion is that the composting, for example, may be carried out quite efficiently also as a continuously operating drum composting by developing equipment and processes in a necessary way. Also other composting methods, like batch-type composting, may be used, although the efficiency of the method is then remarkably lower.

The invention may be varied within the scope of the appended claims.

## Claims

1. Method of treating and utilizing sludge, **characterized in that** therein:
in a first phase (1, 1A, 1B, 2) hydrophilic water binding sludge particles are caused to attach to the surface of hydrophobic organic grains, like hydrophobic grains of peat, the size of which is typically within a range of 2 to 20 millimeters,
in a second phase (4) the grains obtained thereby having a water-bearing layer of sludge particles on the surface thereof are dried to hydrophobize also the surface layer, the drying including pulse drying in which hot air is first blown through the grains long enough so that the grains are warmed up and then air with a temperature somewhat lower than the temperature of the grains is blown through the grains for removing moisture efficiently from the surface layer, and
in a third phase (5) an essential portion of the hydrophobic grains obtained thereby are circulated back to said first phase of the method, so that hydrophobic grains are circulated in the method several times on an average.

2. Method according to claim 1, **characterized in that** hydrophobic grains are circulated in the method 5 to 10 times on an average.

3. Method according to claim 1, **characterized in that** sludge particles are in said first phase caused to attach to the surface of hydrophobic organic grains by mixing hydrophobic grains with sludge (1) and by extruding (2) the mixture obtained.

4. Method according to claim 1, **characterized in that** sludge particles are in said first phase caused to attach to the surface of hydrophobic organic grains by filtering water including sludge by means of the grains (1A), by mixing the sludge-coated grains with hydrophobic organic grains according to need (1B) and by extruding (2) the mixture obtained.

5. Method according to claim 4, **characterized in that** grains hydrophobized again by drying are circulated back (5) to both the filtering (1A) and mixing (1B).

6. Method according to claim 1, **characterized in that** grains grown up or attached to each other in the circulation are split to smaller ones.

7. Method according to claim 1, **characterized in that** the grains are composted (3) between said first phase and second phase (4).

8. Method according to claim 7, **characterized in that** the mixture is composted (3) as extruded to pieces in a continuously operating process in which the temperature of the pieces is raised rapidly to the thermophilic range within which the composting is mainly carried out.

9. Method according to claim 1, **characterized in that** grains taken off from the circulation are coated.

10. Method according to claim 9, **characterized in that** grains taken off from the circulation are coated with one or more of the following materials: lime, ash, nutrient solution, clay, gypsum, silicon carbonate.

11. Method according to claim 1, **characterized in that** grains are coated with selected materials between cycles of circulation whereby a layer of said materials is formed in the inside of grains.

12. Method according to claim 11, **characterized in that** a selected material is a solution or a mass including nutrients.

13. Method according to claim 1, **characterized in that** substances affecting the properties of the grains are added to the sludge, the mixture of the sludge and hydrophobic grains, or the mixture of the sludge-coated grains and hydrophobic grains.

14. Method according to claim 13, **characterized in that** the added substances affect one or more of the following properties: nutrient content, solubility of nutrients, pH.

## Patentansprüche

1. Verfahren zur Behandlung und Verwendung von Schlamm, **dadurch gekennzeichnet, dass** darin:
in der ersten Phase (1, 1A, 1B, 2) hydrophile, wasseraufnehmende Schlammpartikeln an die Oberfläche von hydrophoben organischen Körnchen, wie hydrophoben Torfkörnchen, deren Größe charakteristisch im Bereich von 2 - 20 Millimetern liegt, zum Anhaften bringen,
in der zweiten Phase (4) so erhaltene Körnchen, die auf der Oberfläche des hydrophoben Körnchens eine Wasser enthaltende Schicht Schlammpartikeln haben, getrocknet werden, um die Oberflächenschicht auch zu hydrophobisieren, wobei die Trocknung Pulstrocknung enthält, in der zuerst heiße Luft lange genug durch die Körnchen geblasen wird, so dass die Körnchen warm werden, und anschließend wird durch die Körnchen Luft geblasen, deren Temperatur etwas niedriger ist als die Temperatur der Körnchen ist, um Feuchtigkeit effektiv aus der Oberflächenschicht zu entfernen, und
in der dritten Phase (5) ein wesentlicher Teil der so erhaltenen hydrophoben Körnchen in die erste Phase des Verfahrens rückzirkuliert werden, so dass hydrophobe Körnchen in dem Verfahren durchschnittlich mehrere Male zirkuliert werden.

2. Verfahren gemäß Anspruch 1, **dadurch gekennzeichnet, dass** hydrophobe Körnchen in dem Verfahren durchschnittlich 5 *-* 10 Mal zirkuliert werden.

3. Verfahren gemäß Anspruch 1, **dadurch gekennzeichnet, dass** Schlammpartikeln in der ersten Phase an die Oberfläche von hydrophoben organischen Körnchen zum Anhaften bringen, indem hydrophobe Körnchen mit Schlamm (1) gemischt werden und die so erhaltene Mischung extrudiert (2) wird.

4. Verfahren gemäß Anspruch 1, **dadurch gekennzeichnet, dass** Schlammpartikeln in der genannten ersten Phase an die Oberfläche von hydrophoben organischen Körnchen zum Anhaften bringen, und **dadurch** Schlamm enthaltendes Wasser (1A) gefiltert wird, indem die die mit Schlamm angehafteten Körnchen je nach Bedarf mit hydrophoben organischen Körnchen (1B) gemischt werden und die so erhaltene Mischung extrudiert (2) wird.

5. Verfahren gemäß Anspruch 4, **dadurch gekennzeichnet, dass** durch Trocknung erneut hydrophobisierte Körnchen sowohl in die Filterung (1A) als auch in die Mischung (1B) rückzirkuliert (5) werden.

6. Verfahren gemäß Anspruch 1, **dadurch gekennzeichnet, dass** die bei der Zirkulierung gewachsenen oder aneinander angehafteten Körnchen außerdem in kleinere Teile zerspalten werden.

7. Verfahren gemäß Anspruch 1, **dadurch gekennzeichnet, dass** die Körnchen zwischen der ersten und der zweiten Phase (4) auch kompostiert (3) werden.

8. Verfahren gemäß Anspruch 7, **dadurch gekennzeichnet, dass** die Mischung als extrudierte Stücke in einem kontinuierlich arbeitenden Prozess, in dem die Temperatur der Stücke schnell auf einen thermophilen Bereich erhöht wird, in dem die Kompostierung hauptsächlich stattfindet, kompostiert (3) wird.

9. Verfahren gemäß Anspruch 1, **dadurch gekennzeichnet, dass** von der Zirkulierung entfernte Körnchen beschichtet werden.

10. Verfahren gemäß Anspruch 9, **dadurch gekennzeichnet, dass** die von der Zirkulierung entfernten Körnchen mit einem oder einigen der folgenden Materialien beschichtet werden: Kalk, Asche, Nährstofflösung, Lehm, Gips, Siliziumkarbonat.

11. Verfahren gemäß Anspruch 1, **dadurch gekennzeichnet, dass** die Körnchen mit den gewählten Materialien zwischen den Zirkulationszyklen beschichtet werden, wobei in dem Körnchen eine Schicht des genannten Materials sich bildet.

12. Verfahren gemäß Anspruch 11, **dadurch gekennzeichnet, dass** das gewählte Material eine nährstoffhaltige Lösung oder Masse ist.

13. Verfahren gemäß Anspruch 1, **dadurch gekennzeichnet, dass** in den Schlamm, in die Mischung des Schlamms und der hydrophoben Körnchen oder in die Mischung der mit Schlamm angehafteten Körnchen und der hydrophoben Körnchen auf die Eigenschaften der Körnchen einwirkende Stoffe hinzugefügt werden.

14. Verfahren gemäß Anspruch 13, **dadurch gekennzeichnet, dass** die Zusatzstoffe auf eine oder einige der folgenden Eigenschaften einwirken: Nährstoffgehalt, Löslichkeit der Nährstoffe, pH.

## Revendications

1. Technique de traitement et d'utilisation de boues, **caractérisé en ce que**
dans une première phase (1, 1A, 1B, 2) on fait adhérer des particules de boues hydrophiles hygroscopiques sur la surface de grains hydrophobes organiques, tels que grains hydrophobes de tourbe, dont la taille est typiquement de l'ordre de 2 à 20 mm,
dans une seconde phase (4) les grains ainsi obtenus qui ont une couche aquifère de particules de boues sur la surface du grain hydrophobe, sont séchés pour hydrophobiser également la couche de surface, le séchage comprenant un séchage à impulsion dans lequel de l'air chaud est d'abord soufflé à travers les grains suffisamment longtemps de manière à ce que les grains chauffent, et ensuite on souffle de l'air d'une température quelque peu inférieure à celle des grains, à travers les grains pour enlever efficacement l'humidité de la couche de surface, et
dans une troisième phase (5) on fait recycler une partie essentielle des grains hydrophobes ainsi obtenus pour les ramener à ladite première phase de la technique, de manière à faire recycler les grains hydrophobes dans le système en moyenne plusieurs fois.

2. Technique selon la revendication 1, **caractérisée en ce que** les grains hydrophobes sont recyclés dans la technique en moyenne de 5 à 10 fois.

3. Technique selon la revendication 1, **caractérisé en ce que** l'on fait adhérer les particules de boues dans ladite première phase à la surface des grains organiques hydrophobes en mélangeant les grains hydrophobes avec les boues (1) et en extrudant (2) le mélange obtenu.

4. Technique selon la revendication 1**, caractérisé en ce que** l'on fait adhérer les particules de boues dans ladite première phase à la surface des grains hydrophobes organiques en filtrant l'eau contenant des boues aux moyens des grains (1A), en mélangeant les grains enrobés de boues avec des grains organiques hydrophobes selon le besoin (1B) et en extrudant (2) le mélange obtenu.

5. Technique selon la revendication 4, **caractérisé en ce que** les grains hydrophobisés de nouveau par séchage sont recyclés (5) vers le filtrage (1A) et le mélange (1B).

6. Technique selon la revendication 1, **caractérisé en ce que** les grains grossis ou collés les uns aux autres lors du recyclage sont décomposés en grains plus petits.

7. Technique selon la revendication 1, **caractérisé en ce que** les grains sont compostés (3) entre lesdites première et seconde phases (4).

8. Technique selon la revendication 7, **caractérisé en ce que** le mélange est composté (3) extrudé en pièces dans un processus à fonctionnement continu, dans lequel la température des pièces est augmentée rapidement jusqu'à un niveau thermophile dans lequel le compostage est principalement mis en oeuvre.

9. Technique selon la revendication 1, **caractérisé en ce que** les grains retirés de la circulation sont enrobés.

10. Technique selon la revendication 9, **caractérisé en ce que** les grains retirés de la circulation sont enrobés avec un ou plusieurs des matériaux suivants: chaux, cendre, solution nutritive, argile, gypse, carbure de silicium.

11. Technique selon la revendication 1, **caractérisé en ce que** les grains sont enrobés avec des matériaux choisis entre les cycles de circulation pendant lesquels une couche desdits matériaux se forme à l'intérieur des grains.

12. Technique selon la revendication 11, **caractérisé en ce qu'**un matériau choisi est une solution ou une masse contenant des substances nutritives.

13. Technique selon la revendication 1, **caractérisé en ce que** des substances agissant sur les propriétés des grains sont ajoutées dans les boues, le mélange de boues et de grains hydrophobes, ou la mélange de grains enrobés de boues et de grains hydrophobes.

14. Technique selon la revendication 13**, caractérisé en ce que** les substances ajoutées influent sur une ou plusieurs des propriétés suivantes: teneur en substances nutritives, solubilité des substances nutritives, pH.
